# EUROPÄISCHE PATENTSCHRIFT

(11) **EP 3 683 454 B1**
(45) Veröffentlichungstag und Bekanntmachung des Hinweises auf die Patenterteilung: **11.03.2026**
(21) Anmeldenummer: 19152219.2
(22) Anmeldetag: 17.01.2019
(51) Int. Cl.: F16B 5/06, F16B 21/07, F16B 21/06

(54) **HALTERUNGSVORRICHTUNG UND VERFAHREN ZUM LÖSEN EINER SNAP-IN-VERBINDUNG**
HOLDER AND METHOD FOR LOOSENING A SNAP-IN CONNECTION
DISPOSITIF DE MAINTIEN ET PROCÉDÉ DE LIBÉRATION D'UN RACCORDEMENT PAR ENCLIQUETAGE

(43) Veröffentlichungstag der Anmeldung: 22.07.2020
(73) Patentinhaber: SFS Group International AG, 9435 Heerbrugg (CH)
(72) Erfinder: Heineke, Kai, 75385 Bad Teinach / Zavelstein (DE); Wagner, Marlon, 72213 Altensteig (DE); Gentner, Philipp, 74189 Weinsberg (DE)

(56) Entgegenhaltungen:
- CN-A- 107 044 472
- CN-A- 108 105 236
- DE-A1- 102006 060 074
- KR-B1- 101 895 522
- US-A- 4 651 136

## Beschreibung

Die Erfindung betrifft eine Halterungsvorrichtung zur Halterung eines Bauteils, wobei die Halterungsvorrichtung durch Magnetkraft von einem Bauteil-Haltemodus in einen Bauteil-Freigabemodus überführbar ist, und ein Verfahren zum Lösen einer Snap-In-Verbindung.

Eine derartige Halterungsvorrichtung ist aus der deutschen Offenlegungsschrift DE 10 2006 060 074 A1 bekannt. Bei der dort vorgeschlagenen Lösung sind Rastmittel in Form von ferromagnetischen halbringförmigen Metallscheiben vorgesehen, die unter Federvorspannung derart kippbar gelagert sind, dass sie beim Herstellen einer Verbindung mit dem zu halternden Bauteil in eine Ringnut des Bauteils einrasten. Zum Lösen der Verbindung ist bei der aus der DE 10 2006 060 074 A1 bekannten Lösung vorgesehen, das Bauteil durch manuell aufzubringende Kraft gegen die Halterungsvorrichtung zu drücken, wodurch sich das Bauteil etwas weiter in die Halterungsvorrichtung hineinbewegt, und durch die Annäherung eines Magneten gleichzeitig eine Magnetkraft auf die halbringförmigen Metallscheiben auszuüben, damit diese derart kippen, dass sie in Ausgriff aus der Ringnut gelangen. Nachdem dies erfolgt ist, kann das Bauteil von der Halterungsvorrichtung abgezogen werden. Diese Lösung weist einige Nachteile auf. Beispielsweise muss ein gewisses Spiel zwischen der Halterungsvorrichtung und dem Bauteil vorhanden sein, damit das Bauteil zum Lösen weiter in die Halterungsvorrichtung hineingedrückt werden kann. Außerdem ist das Bauteil nach dem Ausgreifen der halbringförmigen Metallscheiben vollkommen ungesichert, das heißt es kann im ungünstigsten Fall abfallen, wenn das Bauteil nach dem Ausgriff der halbringförmigen Metallscheiben aus der Ringnut losgelassen wird.

Die Schrift CN 108 105 236 A zeigt eine unsichtbar anbringbare, magnetisch zu öffnende Halterungsvorrichtung mit zwei Komponenten. Die erste Komponente umfasst eine Hülse mit einem darin konzentrisch angeordneten Dorn. An dessen freien Ende befindet sich ein Ringwulst. Die zweite Komponente umfasst eine weitere Hülse, deren freies Ende einen Flanschring aufweist. Dieser Flansch begrenzt den Weg eines magnetischen Rings, der aussen auf der Hülse der zweiten Komponente axial beweglich angebracht ist. Diese Hülse ist ferner axial im Endabschnitt geschlitzt. Ihr Innendurchmesser ist zudem so gewählt, dass die zweite Hülse auf das freie Ende des Dorns der ersten Komponente aufgeschoben werden kann. Die Innenkontur der zweiten Hülse ist so gestaltet, dass sie den Ringwulst formschlüssig umschliessen kann. Ist der Magnetring im Endbereich am Flanschring angeordnet, wird ein eingeführter Dorn gesichert. Das Öffnen und Schliessen der Halterung erfolgt durch einen extern angenäherten Magneten, der, je nach Polrichtung, den Magnetring auf der Hülse der zweiten Komponente verschieben kann.

Das Dokument KR 101 895 522 B1 beschreibt ein Montagewerkzeug bzw. -verfahren für einen Grossbildschirm, der aus einer Vielzahl von Einzelbildschirmen kachelartig zusammengesetzt werden kann. Dazu ist es notwendig, die einzelnen Teil-Bildschirme so eng benachbart wie möglich befestigen bzw. wieder entfernen zu können, was konventionell sehr aufwendig ist. Gezeigt wird eine Rastvorrichtung zwischen einer Hülse und einem Bolzen, die mit Hilfe von Verriegelungselementen gesichert werden. Ein im Bolzen beweglich gelagerter Kolben mit einem Magneten und einer Feder stellt diese Funktion sicher.

Ausgehend vom Stand der Technik liegt der Erfindung daher die Aufgabe zugrunde, eine gattungsgemäße Halterungsvorrichtung anzugeben, bei der die Hemmstellung nicht auf Magnetkräften beruht und nur der Öffnungsvorgang einen externen Magneten erfordert.

Diese Aufgabe wird durch die Merkmale der unabhängigen Ansprüche gelöst. Vorteilhafte Weiterbildungen und Ausgestaltungen der Erfindung ergeben sich aus den abhängigen Ansprüchen.

Bei der erfindungsgemäßen Halterungsvorrichtung ist vorgesehen, dass sie zur Halterung des Bauteils bewegliche Rastmittel aufweist, deren Stellung durch die Magnetkraft nicht beeinflusst wird. Somit verbleiben die Rastmittel auch nach der Überführung der Halterungsvorrichtung in den Bauteil-Freigabemodus zunächst in ihrer in das Bauteil eingerasteten Stellung und rasten erst aus, wenn das Bauteil von der Halterungsvorrichtung abgezogen wird. Da die Rastmittel durch die Magnetkraft nicht bewegt werden, ist es auch nicht erforderlich, durch Druck auf das Bauteil eine entsprechende Bewegungsfreiheit herzustellen.

Um dies zu ermöglichen, weist die Halterungsvorrichtung ein Verriegelungselement auf, das eine Bewegung der Rastmittel im Bauteil-Haltemodus in einer Hemmstellung hemmt und das eine Bewegung der Rastmittel im Bauteil-Freigabemodus in einer Freigabestellung freigibt. Somit wird anstelle der Rastmittel erfindungsgemäß das Verriegelungselement durch die Magnetkraft bewegt.

Obwohl natürlich auch ein indirekter Antrieb des Verriegelungselementes im Rahmen der Erfindung liegt, beispielsweise über ein an dem Verriegelungselement angelenktes ferromagnetisches Element, besteht das Verriegelungselement zumindest abschnittsweise aus ferromagnetischem Material.

Somit ist ein direkter Antrieb möglich und die Anzahl der erforderlichen Bauteile kann minimiert werden.

Weiterhin wird die Halterungsvorrichtung ein Federelement aufweisen, welches das Verriegelungselement in Richtung seiner Hemmstellung vorspannt. Die durch die Magnetkraft hervorgerufene Bewegung des Verriegelungselements in seine Freigabestellung erfolgt dann entgegen der Federkraft des Federelements. Dadurch wird sichergestellt, dass sich das Verriegelungselement ohne wirkende Magnetkraft in seiner Hemmstellung befindet und so einen im Bauteil-Haltemodus unerwünschten Ausgriff der Rastmittel sicher verhindert.

Als besonders vorteilhaft hat es sich herausgestellt, wenn die Rastmittel zumindest abschnittsweise elastisch verformbar sind. Beispielsweise können die Rastmittel eine Mehrzahl von auf einer gemeinsamen Rastmittel-Fußplatte angeordneten Rastfingern aus Kunststoff umfassen, der in der gewünschten Weise elastisch verformbar ist. Der Fachmann erkennt, dass die Steifigkeit der Rastmittel die Kraft festlegt, die im Bauteil-Freigabemodus zum Abnehmen des Bauteils erforderlich ist.

Gemäß einer bevorzugten Ausführungsform der Erfindung ist vorgesehen, dass die Halterungsvorrichtung ein Gehäuse aufweist, in dem die Rastmittel mit Spiel in einer Richtung angeordnet sind, die senkrecht zu einer Annäherungsrichtung verläuft, mit der das Bauteil an die Halterungsvorrichtung angenähert wird. Ein derartiges Spiel kann zum Ausgleich von Toleranzen genutzt werden.

Weiterhin kann es vorteilhaft sein, dass die Halterungsvorrichtung ein Gehäuse aufweist, in dem die Rastmittel angeordnet sind, und dass zwischen dem Gehäuse und den Rastmitteln ein Dämpfungselement vorgesehen ist. Dadurch kann beispielsweise eine zumindest teilweise Schallentkopplung zwischen dem Gehäuse (und einem weiteren Bauteil, dem es zugeordnet ist) und dem Bauteil erzielt werden.

Gegebenenfalls kann vorgesehen sein, dass die Halterungsvorrichtung ein Gehäuse aufweist, und dass das Verriegelungselement in seiner Hemmstellung an dem Gehäuse anliegt. Diese Lösung ist, ohne darauf beschränkt zu sein, besonders dann sinnvoll, wenn das oben erwähnte Spiel in der senkrecht zu einer Annäherungsrichtung verlaufenden Richtung vorgesehen ist, da das Verriegelungselement dann in seiner Hemmstellung bezüglich dem Gehäuse fixiert ist, wodurch beispielsweise unerwünschte Klappergeräusche vermieden werden können. Die Anlage muss nicht zwingend flächig sein. Beispielsweise kann das Verriegelungselement in den entsprechenden, dem Gehäuse gegenüberliegenden Bereichen, zahnartige Vorsprünge aufweisen, die zur Fixierung des Verriegelungselements in Anlage mit dem Gehäuse gebracht werden.

Gemäß einer anderen Weiterbildung der Erfindung ist vorgesehen, dass die Halterungsvorrichtung ohne Magnetkraft und zerstörungsfrei vom Bauteil-Haltemodus in den Bauteil-Freigabemodus wechselt, wenn zwischen dem Bauteil und den Rastmitteln eine Kraft wirkt, die einen vorgegebenen Schwellenwert übersteigt. Somit wird die Funktion einer Überlastsicherung geschaffen, die beispielsweise verhindert, dass die Verankerung des Gehäuses aus einem Flugzeug-Wandelement, an dem es verankert ist, herausgerissen wird, wenn zu starke Zugkräfte auftreten. Dem Fachmann ist dabei klar, dass der vorgegebene Schwellenwert beispielsweise durch die Wahl der Rast- und Anlageflächen, die Wahl der jeweiligen Winkel dieser Flächen, die Wahl von etwaigen Federkräften und so weiter eingestellt werden, um nur einige mögliche Parameter zu nennen.

Die eingangs genannte Aufgabe wird auch durch ein Verfahren zum Lösen einer Snap-In-Verbindung zwischen einer Halterungsvorrichtung, insbesondere einer erfindungsgemäßen Halterungsvorrichtung, und einem Bauteil gelöst, wenn die folgenden Schritte vorgesehen sind: Erzeugen eines Magnetfeldes in der Nähe der Halterungsvorrichtung; und Aufbringen einer die Halterungsvorrichtung und das Bauteil auseinanderbewegenden Kraft zur Lösung der Snap-In-Verbindung. Denn auch bei dieser Lösung erfolgt der Ausgriff von die Snap-In-Verbindung herstellenden Rastmitteln erst mit dem Abnehmen des Bauteils, und ein vorheriges Andrücken des Bauteils ist nicht erforderlich, weshalb auch kein entsprechendes Spiel vorhanden sein muss.

Ähnlich wie bei der erfindungsgemäßen Halterungsvorrichtung kann es auch hier vorteilhaft sein, dass durch das Magnetfeld eine Magnetkraft ausgeübt wird, die ein Verriegelungselement von einer Hemmstellung, in der es eine Bewegung von Rastmitteln hemmt, in eine Freigabestellung überführt, in der es die Bewegung der Rastmittel freigibt.

Auch im Rahmen des erfindungsgemäßen Verfahrens wird bevorzugt, dass die Überführung des Verriegelungselementes von der Hemmstellung in die Freigabestellung entgegen einer Federkraft erfolgt. Anders ausgedrückt wird das Verriegelungselement durch ein Federelement sicher in seiner Hemmstellung gehalten, solange keine entsprechende Magnetkraft wirkt.

Für das erfindungsgemäße Verfahren wird es als vorteilhaft erachtet, dass die Rastmittel beim Lösen der Verbindung elastisch verformt werden, wenn sich das Verriegelungselement in seiner Freigabestellung befindet und die die Halterungsvorrichtung und das Bauteil auseinanderbewegende Kraft aufgebracht wird. Die aufzubringenden Kräfte können dabei wieder durch geeignete Auslegung von beispielsweise Kunststoff-Rastfingern festgelegt werden, wobei natürlich auch andere Auslegungsparameter eine Rolle spielen.

Obwohl auch der Einsatz von Permanentmagneten in Frage kommt, kann zumindest bei einigen Ausführungsformen des erfindungsgemäßen Verfahrens vorgesehen sein, dass das Magnetfeld durch einen Elektromagnet erzeugt wird, der zum Lösen der Verbindung aktiviert wird. Ein solcher Elektromagnet kann beispielsweis in einen Arbeitshandschuh integriert sein. Auf diese Weise kann insbesondere sichergestellt werden, dass irgendwelche Halterungsvorrichtungen nicht versehentlich in einen Bauteil-Freigabemodus gebracht werden, indem ein Permanentmagnet versehentlich angenähert wird. Außerdem ist es möglich, einen Bauteil-Freigabemodus bei schon perfekt platziertem Elektromagnet erst zu einem gewünschten Zeitpunkt hervorzurufen. Beispielsweise bei der Demontage besonders schwerer Bauteile, die von mehreren Personen gehalten werden müssen. Es können gegebenenfalls auch mehrere Halterungsvorrichtungen durch die synchrone Aktivierung von mehreren korrekt positionierten Elektromagneten synchron in den Bauteil-Freigabemodus versetzt werden.

Obwohl das erfindungsgemäße Verfahren nicht darauf beschränkt ist, ist es besonders im Bereich des Fahrzeugbaus und insbesondere im Bereich des Luftfahrzeugbaus einsetzbar, wobei dann die Halterungsvorrichtung Bestandteil eines ersten Flugzeugbauteils (beispielsweise eines Innenwandelements) und das Bauteil Bestandteil eines zweiten Flugzeugbauteils (beispielsweise eines Rahmens) ist. Der Begriff "Bestandteil" ist dabei weit auszulegen, und es kommen alle denkbaren Konstruktions- und Befestigungsvarianten in Betracht, beispielsweise integrierte Konstruktion, Kleben, Schweißen, Schrauben, Nieten, um nur einige Möglichkeiten zu nennen.

Ausführungsbeispiele der Erfindung werden nachfolgend anhand der zugehörigen Zeichnungen näher erläutert.

### Es zeigen:

- Figur 1: eine perspektivische Darstellung einer Ausführungsform einer erfindungsgemäßen Halterungsvorrichtung, die auch im Rahmen des erfindungsgemäßen Verfahrens verwendet werden kann;
- Figur 2: eine perspektivische Explosionszeichnung der Halterungsvorrichtung von Figur 1; und
- Figur 3: eine Schnittansicht der Halterungsvorrichtung von Figur 1 mit einem gehalterten Bauteil, im Bauteil-Haltemodus.

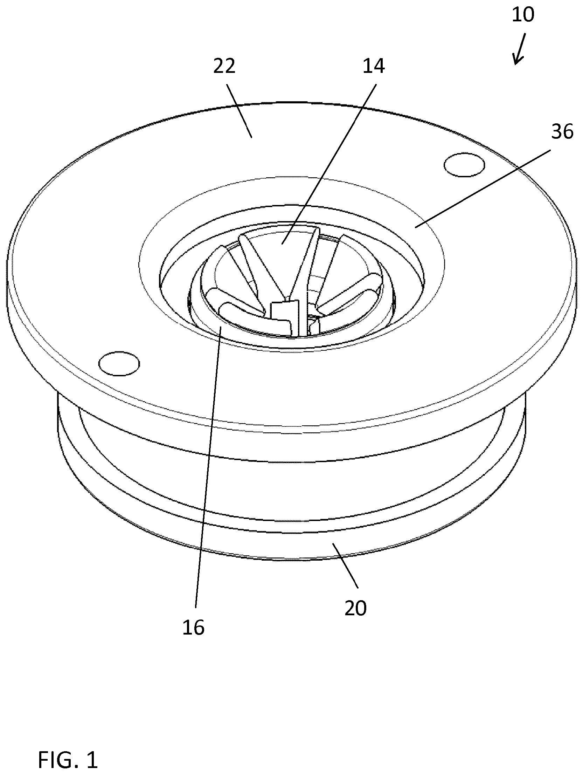

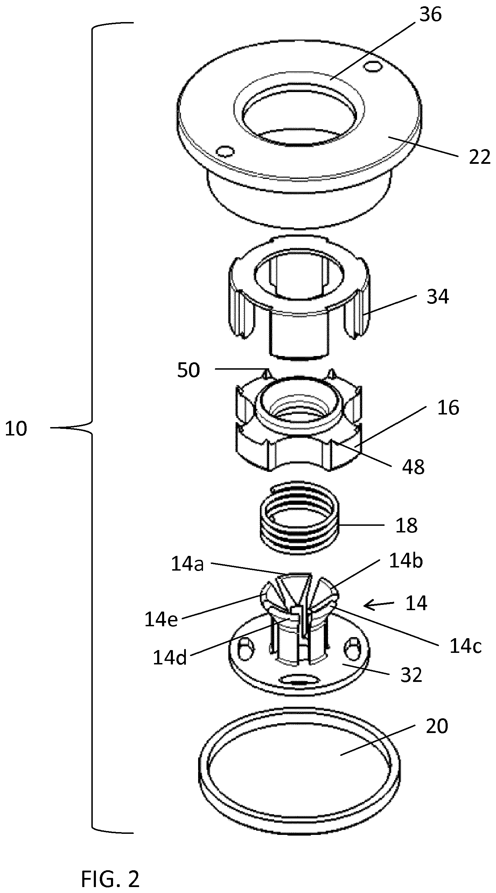

Bei der nachfolgenden Beschreibung der Zeichnungen wird auf die Figuren 1 bis 3 gemeinsam Bezug genommen.

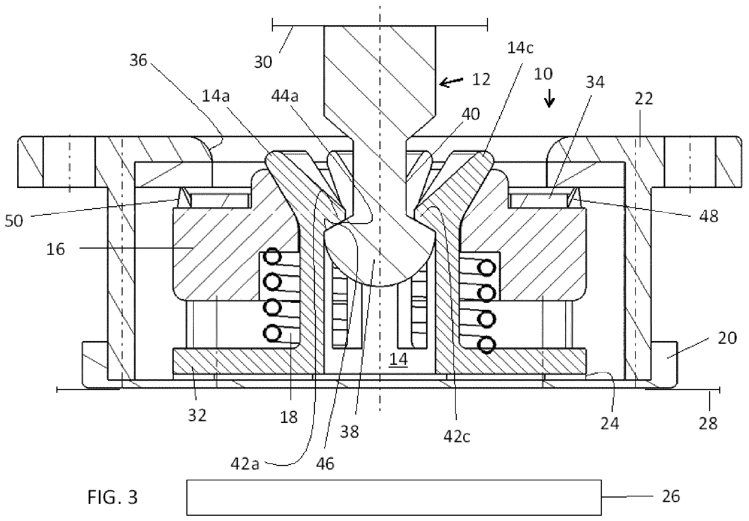

Die dargestellte Halterungsvorrichtung 10 ist dazu vorgesehen, ein nur in Figur 3 schematisch angedeutetes erstes Flugzeugbauteil 28, an dem die Halterungsvorrichtung 10 befestigt ist, mit einem ebenfalls nur in Figur 3 schematisch angedeutetem zweiten Flugzeugbauteil 30 zu verbinden. Das zweite Flugzeugbauteil 30 umfasst das Bauteil 12, das seinerseits einen Pin 38 aufweist. Wie in Figur 3 zu erkennen, weist der Pin 38 eine Ringnut 40 mit schrägen Nutwänden auf. Der untere Endabschnitt des Pins 38 ist halbkugelförmig ausgestaltet, was, wie unten noch näher erläutert, die Herstellung der Verbindung, genauer gesagt der Snap-In-Verbindung, erleichtert.

Die Halterungsvorrichtung 10 umfasst einen Gehäuseboden 20 und einen Gehäusedeckel 22 mit einer Deckelöffnung 36, die Rastmittel 14 zugänglich macht, die dazu vorgesehen sind, in die Ringnut 40 einzurasten. Die Rastmittel 14 umfassen eine Rastmittel-Fußplatte 32, von der aus sich bei der dargestellten Ausführungsform fünf im Kreis angeordnete Rastfinger 14a - 14e senkrecht nach oben erstrecken. Die fünf Rastfinger 14a - 14e bilden somit eine Art runden Käfig, oder einen mehrfach geschlitzten Kelch, je nach Betrachtungsweise. Die bezogen auf die Darstellung oberen, freien Enden der Rastfinger 14a - 14e bilden eine Art Trichter oder Kragen. Weiterhin sind die Rastfinger 14a - 14e mit radial nach innen weisenden Rastnasen ausgestattet, von denen die beiden in Figur 3 geschnitten dargestellten mit den Bezugszeichen 42a und 42c bezeichnet sind. Die Rastfinger 14a - 14e sind zumindest abschnittsweise derart elastisch verformbar, dass sie federnd radial nach außen gebogen werden, wenn der Pin 38 des Bauteils 12 von oben in den trichterartigen oberen Randbereich eingeführt wird. In der in Figur 3 dargestellten Stellung wurde der Pin 38 bereits so weit nach unten bewegt, dass die Rastnasen 42a und 42b (und natürlich auch die verbleibenden 3 Rastnasen) in die Ringnut 40 des Pins 38 zurückgefedert sind.

Ein ferromagnetisches Verriegelungselement 16 umgibt die käfig- oder kelchartige Anordnung der Rastfinger 14a - 14e und wird von einem Federelement 18 bezogen auf die Darstellung nach oben gedrückt, bis Zähne 48, 50 des Verriegelungselements 16 wie dargestellt in Anlage an die untere Seite des Gehäusedeckels 22 gelangen. Das Federelement 18 ist im dargestellten Fall als Spiralfeder ausgebildet, welche die käfig- oder kelchartige Anordnung der Rastfinger 14a - 14e ebenfalls umgibt, wobei sich das obere Federende an dem Verriegelungselement 16 und das untere Federende an der Rastmittel-Fußplatte 32 abstützt. In der in Figur 3 dargestellten Hemmstellung des Verriegelungselementes 16 hemmt das Verriegelungselement 16 eine radial nach außen gerichtete Bewegung der Rastfinger 14a - 14e, im dargestellten Fall, indem es den oberen trichter- oder kragenförmigen Randbereich der Rastfinger 14a - 14e formschlüssig umgibt. Bevor es diese Hemmstellung eingenommen hat, wurde das Verriegelungselement 16 beim Einführen des Pins 38 durch die sich nach außen bewegenden Rastfinger 14a - 14e entgegen der Federkraft nach unten verdrängt. Die halbkugelförmige Unterseite des Pins 38 sorgt dabei dafür, dass beim Auseinanderdrücken der Rastfinger 14a - 14e nur minimale Reibungsverluste auftreten, da es nur zu linienförmigen Kontaktbereichen kommt.

Die Rastmittel 14, das Verriegelungselement 16 und das Federelement 18 sind durch einen Clip 34 zu einer Baugruppe zusammen gefügt, wobei der Clip 34 auch eine Führung des Verriegelungselementes 16 bewirkt, wenn sich dieses bewegt, was unten noch näher erläutert wird. Jedenfalls ist die in Rede stehende Baugruppe in dem Gehäuse 20, 22 mit seitlichem, also zur Annäherungsrichtung des Bauteils 12 senkrechtem Spiel angeordnet. Die Baugruppe kann somit innerhalb des Gehäuses seitlich verschoben werden, beispielsweise in Form eines Zentriervorganges beim Einführen des Pins 38 in die Rastmittel 14. Auf diese Weise können Lagetoleranzen in einem gewissen Umfang ausgeglichen werden.

Ein nur in Figur 3 schematisch angedeutetes Dämpfungselement 24 kann zwischen der Rastmittel-Fußplatte 32 und dem Gehäuseboden 20 vorgesehen sein, um eine Dämpfung/Schallentkopplung zwischen dem Pin 38 und dem Gehäuse zu erzielen. Entsprechende Maßnahmen können gegebenenfalls an allen Kontaktstellen zwischen der oben genannten Baugruppe und dem Gehäuse 20, 22 getroffen werden.

Bei der dargestellten Ausführungsform sind die Bauteil-Rastfläche 46 (also die untere Nutwand der Ringnut 40) und die Rastmittel-Rastflächen (nur die Rastmittel-Rastfläche 44a der Rastnase 42a ist mit einem Bezugszeichen versehen) derart abgeschrägt, dass sich eine Überlastsicherung ergibt. Wirkt eine entsprechend starke nach oben gerichtete Zugkraft auf das Bauteil 12, so führt dies dazu, dass sich die Rastfinger 14a - 14e nach außen bewegen und dabei das Verriegelungselement 16 entgegen der Federkraft nach unten zwingen, bis die Rastnasen der Rastmittel 14 in Ausgriff von der Ringnut 40 gelangen, so dass der Pin 38 und damit das Bauteil 12 freigegeben ist.

Zum Lösen der Snap-In-Verbindung zwischen der Halterungsvorrichtung 10 und dem Bauteil 12 wird ein an die Halterungsvorrichtung angenäherter Elektromagnet 26 aktiviert, der dann eine bezogen auf die Darstellung nach unten gerichtete Magnetkraft auf das ferromagnetische Verriegelungselement 16 erzeugt. Durch diese Magnetkraft wird das Verriegelungselement 16 bezogen auf die Darstellung nach unten in seine Freigabestellung bewegt, entgegen der durch das Federelement 18 ausgeübten Federkraft. In der (in den Zeichnungen nicht dargestellten) Freigabestellung gibt das Verriegelungselement 16 den oberen Bereich der Rastfinger 14a - 14e frei, so dass die Rastnasen der Rastfinger 14a - 14e durch verhältnismäßig moderate (im Vergleich zum oben erläuterten Überlastfall) nach oben gerichtete an dem Bauteil 12 angreifende Zugkräfte nach außen bewegt werden können, bis Rastnasen aus der Ringnut 40 ausgreifen.

### Bezugszeichenliste

- 10: Halterungsvorrichtung
- 12: Bauteil
- 14: Rastmittel
- 14a - 14e: Rastfinger
- 16: Verriegelungselement
- 18: Federelement
- 20: Gehäuseboden
- 22: Gehäusedeckel
- 24: Dämpfungselement
- 26: Elektromagnet
- 28: Erstes Flugzeugbauteil
- 30: Zweites Flugzeugbauteil
- 32: Rastmittel-Fußplatte
- 34: Clip
- 36: Deckelöffnung
- 38: Pin
- 40: Ringnut
- 42: Rastnase
- 42c: Rastnase
- 44: Rastmittel-Rastfläche
- 46: Bauteil-Rastfläche
- 48: Zahn
- 50: Zahn

## Patentansprüche

1. Halterungsvorrichtung (10) zur Halterung eines Bauteils (12), wobei die Halterungsvorrichtung (10)
- durch Magnetkraft von einem Bauteil-Haltemodus in einen Bauteil-Freigabemodus überführbar ist, und;
- sie zur Halterung des Bauteils (12) bewegliche Rastmittel (14) aufweist, deren Stellung durch die Magnetkraft nicht beeinflusst wird; und ferner
- sie ein Verriegelungselement (16) aufweist, das eine Bewegung der Rastmittel (14) im Bauteil-Haltemodus in einer Hemmstellung hemmt, und das eine Bewegung der Rastmittel (14) im Bauteil-Freigabemodus in einer Freigabestellung freigibt; und
- die Halterungsvorrichtung (10) ein Federelement (18) aufweist, welches das Verriegelungselement (16) in Richtung seiner Hemmstellung vorspannt und
- das Verriegelungselement (16) so ohne wirkende Magnetkraft sich in seiner Hemmstellung befindet und einen im Bauteil-Haltemodus unerwünschten Ausgriff der Rastmittel sicher verhindert
**dadurch gekennzeichnet, dass**
das Verriegelungselement (16) zumindest abschnittsweise aus ferromagnetischem Material besteht und die Rastmittel (14) aus einer käfig- oder kelchartigen Anordnung von Rastfingern (14a - 14e) gebildet sind, die vom Verriegelungselement (16) umgeben sind; wobei das Federelement (18) als Spiralfeder ausgebildet ist, welche die käfig- oder kelchartige Anordnung der Rastfinger (14a - 14e) ebenfalls umgibt.

2. Halterungsvorrichtung (10) nach Anspruch 1, **dadurch gekennzeichnet, dass** die Rastmittel (14) bzw. Rastfinger (14a - 14e) zumindest abschnittsweise elastisch verformbar sind.

3. Halterungsvorrichtung (10) nach einem der vorhergehenden Ansprüche, **dadurch gekennzeichnet, dass** sie ein Gehäuse (20, 22) aufweist, in dem die Rastmittel (14) bzw. Rastfinger (14a - 14e) mit Spiel in einer Richtung angeordnet sind, die senkrecht zu einer Annäherungsrichtung verläuft, mit der das Bauteil (12) zur Halterung angenähert wird.

4. Halterungsvorrichtung (10) nach einem der vorhergehenden Ansprüche, **dadurch gekennzeichnet, dass** sie ein Gehäuse (20, 22) aufweist, in dem die Rastmittel (14) bzw. Rastfinger (14a - 14e) angeordnet sind, und dass zwischen dem Gehäuse (20, 22) und den Rastmitteln (14) bzw. Rastfinger (14a - 14e) ein Dämpfungselement (24) vorgesehen ist.

5. Halterungsvorrichtung (10) nach einem der vorhergehenden Ansprüche, **dadurch gekennzeichnet, dass** sie ein Gehäuse (20, 22) aufweist, und dass das Verriegelungselement (16) in seiner Hemmstellung an dem Gehäuse (20, 22) anliegt.

6. Halterungsvorrichtung (10) nach einem der vorhergehenden Ansprüche, **dadurch gekennzeichnet, dass** sie ohne Magnetkraft und zerstörungsfrei vom Bauteil-Haltemodus in den Bauteil-Freigabemodus wechselt, wenn zwischen dem Bauteil (12) und den Rastmitteln (14) eine Kraft wirkt, die einen vorgegebenen Schwellenwert übersteigt.

7. Verfahren zum Lösen einer Snap-In-Verbindung zwischen einer Halterungsvorrichtung (10) nach einem der vorhergehenden Ansprüche und einem Bauteil (12), mit den folgenden Schritten:
- Erzeugen eines Magnetfeldes in der Nähe der Halterungsvorrichtung (10); und
- Aufbringen einer die Halterungsvorrichtung (10) und das Bauteil (12) auseinanderbewegenden Kraft zur Lösung der Snap-In-Verbindung.

8. Verfahren nach Anspruch 7, **dadurch gekennzeichnet, dass** durch das Magnetfeld eine Magnetkraft ausgeübt wird, die ein Verriegelungselement (16) von einer Hemmstellung, in der es eine Bewegung von Rastmitteln (14) bzw. Rastfingern (14a - 14e) hemmt, in eine Freigabestellung überführt, in der es die Bewegung der Rastmittel (14) bzw. Rastfinger (14a - 14e) freigibt.

9. Verfahren nach Anspruch 8, **dadurch gekennzeichnet, dass** die Überführung des Verriegelungselementes (16) von der Hemmstellung in die Freigabestellung entgegen einer Federkraft erfolgt.

10. Verfahren nach Anspruch 8 oder 9, **dadurch gekennzeichnet, dass** die Rastmittel (14) bzw. Rastfinger (14a - 14e) beim Lösen der Verbindung elastisch verformt werden, wenn sich das Verriegelungselement (16) in seiner Freigabestellung befindet und die die Halterungsvorrichtung (10) und das Bauteil (12) auseinanderbewegende Kraft aufgebracht wird.

11. Verfahren nach einem der Ansprüche 7 bis 10, **dadurch gekennzeichnet, dass** das Magnetfeld durch einen Elektromagnet (26) erzeugt wird, der zum Lösen der Verbindung aktiviert wird.

12. Verfahren nach einem der Ansprüche 7 bis 11, **dadurch gekennzeichnet, dass** die Halterungsvorrichtung (10) Bestandteil eines ersten Flugzeugbauteils (28) und das Bauteil (12) Bestandteil eines zweiten Flugzeugbauteils (30) ist.

## Claims

1. Holding device (10) for holding a component (12), wherein the holding device (10)
- can be transferred from a component holding mode to a component release mode by magnetic force, and;
- has movable latching means (14) for holding the component (12), the position of which is not influenced by the magnetic force; and further
- has a locking element (16) which inhibits movement of the latching means (14) in an inhibiting position in the component holding mode and which releases movement of the latching means (14) in a release position in the component release mode; and
- the holding device (10) has a spring element (18) which pretensions the locking element (16) in the direction of its inhibiting position, and
- the locking element (16) is thus in its inhibiting position without any magnetic force acting on it and reliably prevents any undesirable disengagement of the latching means in the component holding mode,
**characterized in that**
the locking element (16) consists at least in sections of ferromagnetic material and the latching means (14) are formed from a cage-like or cup-like arrangement of latching fingers (14a-14e) which are surrounded by the locking element (16); wherein the spring element (18) is designed as a coil spring which also surrounds the cage-like or cup-like arrangement of the latching fingers (14a-14e).

2. Holding device (10) according to claim 1, **characterized in that** the latching means (14) or latching fingers (14a-14e) are elastically deformable at least in sections.

3. Holding device (10) according to one of the preceding claims, **characterized in that** it has a housing (20, 22) in which the latching means (14) or latching fingers (14a-14e) are arranged with play in a direction that runs perpendicular to an approach direction with which the component (12) is approached for mounting.

4. Holding device (10) according to one of the preceding claims, **characterized in that** it has a housing (20, 22) in which the latching means (14) or latching fingers (14a-14e) are arranged, and **in that** a damping element (24) is provided between the housing (20, 22) and the latching means (14) or latching fingers (14a-14e).

5. Holding device (10) according to one of the preceding claims, **characterized in that** it has a housing (20, 22) and **in that** the locking element (16) rests against the housing (20, 22) in its inhibiting position.

6. Holding device (10) according to one of the preceding claims, **characterized in that** it switches from the component holding mode to the component release mode without magnetic force and in a non-destructive manner when a force exceeding a predetermined threshold value acts between the component (12) and the latching means (14).

7. Method for releasing a snap-in connection between a holding device (10) according to one of the preceding claims and a component (12), comprising the following steps of:
- generating a magnetic field in the vicinity of the holding device (10); and
- applying a force that moves the holding device (10) and the component (12) apart to release the snap-in connection.

8. Method according to claim 7, **characterized in that** the magnetic field exerts a magnetic force which moves a locking element (16) from an inhibiting position, in which it inhibits movement of latching means (14) or latching fingers (14a-14e), into a release position, in which it releases the movement of the latching means (14) or latching fingers (14a-14e).

9. Method according to claim 8, **characterized in that** the transfer of the locking element (16) from the inhibiting position to the release position takes place against a spring force.

10. Method according to claim 8 or 9, **characterized in that** the latching means (14) or latching fingers (14a-14e) are elastically deformed when the connection is released, if the locking element (16) is in its release position and the force moving the holding device (10) and the component (12) apart is applied.

11. Method according to one of claims 7 to 10, **characterized in that** the magnetic field is generated by an electromagnet (26) which is activated to release the connection.

12. Method according to one of claims 7 to 11, **characterized in that** the holding device (10) is part of a first aircraft component (28) and the component (12) is part of a second aircraft component (30).

## Revendications

1. Dispositif de maintien (10) pour le maintien d'un composant (12), lequel dispositif de maintien (10)
- peut être passé d'un mode de maintien du composant à un mode de libération du composant par une force magnétique et
- comporte pour le maintien du composant (12) des moyens d'enclenchement (14) mobiles dont la position n'est pas influencée par la force magnétique, et
- comporte en outre un élément de verrouillage (16) qui bloque un mouvement des moyens d'enclenchement (14) dans une position de blocage en mode de maintien du composant et libère un mouvement des moyens d'enclenchement (14) dans une position de libération en mode de libération du composant, et
- le dispositif de maintien (10) comporte un élément de ressort (18) qui précontraint l'élément de verrouillage (16) vers sa position de blocage et
- l'élément de verrouillage (16) se trouve ainsi dans sa position de blocage sans participation de la force magnétique et empêche de manière sûre un dégagement intempestif de la prise des moyens d'enclenchement en mode de maintien du composant,
**caractérisé en ce que** l'élément de verrouillage (16) se compose au moins en partie de matériau ferromagnétique et les moyens d'enclenchement (14) sont formés d'une disposition en forme de cage ou de tulipe de pattes d'enclenchement (14a - 14e) qui sont entourées par l'élément de verrouillage (16), l'élément de ressort (18) étant conformé comme un ressort hélicoïdal qui entoure également la disposition en forme de cage ou de tulipe des pattes d'enclenchement (14a - 14e).

2. Dispositif de maintien (10) selon la revendication 1, **caractérisé en ce que** les moyens d'enclenchement (14) ou pattes d'enclenchement (14a - 14e) sont au moins en partie capables de déformation élastique.

3. Dispositif de maintien (10) selon l'une des revendications précédentes, **caractérisé en ce qu'**il comporte un boîtier (20, 22) dans lequel les moyens d'enclenchement (14) ou pattes d'enclenchement (14a - 14e) sont disposés avec un jeu dans une direction perpendiculaire à une direction d'approche dans laquelle le composant (12) est approché de la fixation.

4. Dispositif de maintien (10) selon l'une des revendications précédentes, **caractérisé en ce qu'**il comporte un boîtier (20, 22) dans lequel les moyens d'enclenchement (14) ou pattes d'enclenchement (14a - 14e) sont disposés et **en ce qu'**un élément d'amortissement (24) est prévu entre le boîtier (20, 22) et les moyens d'enclenchement (14) ou pattes d'enclenchement (14a - 14e).

5. Dispositif de maintien (10) selon l'une des revendications précédentes, **caractérisé en ce qu'**il comporte un boîtier (20, 22) et **en ce que** l'élément de verrouillage (16) repose contre le boîtier (20, 22) dans sa position de blocage.

6. Dispositif de maintien (10) selon l'une des revendications précédentes, **caractérisé en ce qu'**il passe du mode de maintien du composant au mode de libération du composant sans force magnétique et de façon non destructrice quand une force dépassant un seuil prédéterminé est exercée entre le composant (12) et les moyens d'enclenchement (14).

7. Procédé pour défaire un assemblage à enclenchement entre un dispositif de maintien (10) selon l'une des revendications précédentes et un composant (12), comprenant les étapes suivantes :
- génération d'un champ magnétique à proximité du dispositif de maintien (10) et
- application d'une force écartant le dispositif de maintien (10) et le composant (12) pour défaire l'assemblage à enclenchement.

8. Procédé selon la revendication 7, **caractérisé en ce que** le champ magnétique exerce une force magnétique qui fait passer un élément de verrouillage (16) d'une position de blocage, dans laquelle il bloque un mouvement de moyens d'enclenchement (14) ou pattes d'enclenchement (14a - 14e), à une position de libération dans laquelle il libère le mouvement des moyens d'enclenchement (14) ou pattes d'enclenchement (14a - 14e).

9. Procédé selon la revendication 8, **caractérisé en ce que** le passage de l'élément de verrouillage (16) de la position de blocage à la position de libération s'effectue contre une force de ressort.

10. Procédé selon la revendication 8 ou 9, **caractérisé en ce que** les moyens d'enclenchement (14) ou pattes d'enclenchement (14a - 14e) subissent une déformation élastique lors de la séparation de l'assemblage, quand l'élément de verrouillage (16) se trouve dans sa position de libération et que la force écartant le dispositif de maintien (10) et le composant (12) est exercée.

11. Procédé selon l'une des revendications 7 à 10, **caractérisé en ce que** le champ magnétique est produit par un électroaimant (26) qui est activé pour défaire l'assemblage.

12. Procédé selon l'une des revendications 7 à 11, **caractérisé en ce que** le dispositif de maintien (10) fait partie d'un premier composant d'avion (28) et le composant (12) fait partie d'un deuxième composant d'avion (30).
